# EUROPÄISCHE PATENTSCHRIFT

(11) **EP 0 544 721 B1**
(45) Veröffentlichungstag und Bekanntmachung des Hinweises auf die Patenterteilung: **13.04.1994**
(21) Anmeldenummer: 91914537.5
(22) Anmeldetag: 09.08.1991
(51) Int. Cl.: B60R 21/32

(54) **ZÜNDSTEUERGERÄT ZUM AUSLÖSEN EINES INSASSENSCHUTZSYSTEMES EINES FAHRZEUGES**
FIRING CONTROL DEVICE FOR TRIGGERING PASSENGER RESTRAINT SYSTEMS IN MOTOR VEHICLES
APPAREIL DE COMMANDE D'ALLUMAGE POUR DECLENCHER LE SYSTEME DE PROTECTION DES PASSAGERS D'UN VEHICULE

(30) Priorität: 22.08.1990 EP 9011610 U
(43) Veröffentlichungstag der Anmeldung: 09.06.1993
(73) Patentinhaber: SIEMENS AKTIENGESELLSCHAFT, 80333 München (DE)
(72) Erfinder: HUBER, Anton, D-8400 Regensburg (DE); SWART, Marten, D-8400 Regensburg (DE); NEUGEBAUER, Dieter, D-8413 Regenstauf (DE)
(86) Internationale Anmeldenummer: EP9101524
(87) Internationale Veröffentlichungsnummer: WO9203311

(56) Entgegenhaltungen:
- EP-A- 0 027 747
- EP-A- 0 284 728
- PATENT ABSTRACTS OF JAPAN, Band 13, Nr. 432 (M-874)(378), 27. September 1989

## Beschreibung

Zündsteuergeräte zum Auslösen eines Insassenschutzsystemes eines Fahrzeuges, also z.B. zum Auslösen einer Sprengladung eines Airbag- und / oder Überrollbügel- und / oder Gurtstrammersystemes eines KFZ durch elektrisches Zünden einer oder mehrerer Zündpillen, sind für sich in großer Zahl bekannt.

Die Erfindung geht von dem im Oberbegriff des Patentanspruches 1 definierten speziellen Zündsteuergerät aus, welches für sich durch die
- EP-A2-0 027 747
   bekannt ist. Die Erfindung ist aber nicht nur auf das dort beschriebene Zündsteuergerät und dessen Weiterbildungen anwendbar, sondern darüber hinaus auf alle durch den Oberbegriff des Patentanspruches 1 definierten Zündsteuergeräte.
   Ein ähnliches Zündsteuergerät, das jedoch keinen Speicher zum Speichern der Daten enthält, die im Crashfalle mittels eines Meßwiderstandes einer Meßeinheit ermittelt werden, ist z.B. durch die nicht vorveröffentlichte
- PCT-Anmeldung PCT/DE 90/00125 = WO 91/05680 beschrieben.

Daneben sind Unfalldatenschreiber für Fahrzeuge, besonders für Flugzeuge, allgemein bekannt.

Die Erfindung wurde zwar insbesondere für ein KFZ entwickelt, für das es sich besonders eignet. Es ergab sich aber, daß die Erfindung darüber hinaus auch für andere Fahrzeuge geeignet ist, welche mit einem elektrisch auszulösenden Insassenschutzsystem ausgestattet sind.

Die Aufgabe,
- nachträglich auswertbare Daten über das durch einem Crash bewirkte Auslösen so sicher zu speichern, daß nachträglich nicht mehr ohne weiteres die gespeicherten Daten durch Manipulationen heimlich verfälscht werden können - z.B. durch nachträgliches Zünden oder durch nachträgliches Vortäuschen eines Crashkriteriums verfälscht werden können,
- damit nach einem Crash unverfälschte Daten über die Auslösung - z.B. Richtern, Verkehrssachverständigen, KFZ-Herstellern, KFZ-Zulieferern und Straßenplanern zur Verfügung stellen zu können, bzw. nachträglich verfälschte Daten als solche erkennen zu können,

wird erfindungsgemäß durch den im Patentanspruch 1 definierten Gegenstand gelöst.

Die Aufgabe der Erfindung hat also zwei Hauptaspekte : erstens sollen Daten über den Crash und die Auslösung des Insassenschutzsystemes richtig erfaßt bzw. gemessen werden und dann dauerhaft gespeichert werden, und zweitens soll eine nach-trägliche heimliche Manipulation an den gespeicherten Daten möglichst stark erschwert oder verunmöglicht werden.

Die in den Unteransprüchen definierten Gegenstände gestatten, zusätzliche Vorteile zu erreichen. U.a. gestatten nämlich die zusätzlichen Maßnahmen gemäß Patentanspruch
- 2,: dem Manipulierer noch stärker zu erschweren, die gespeicherten Daten nachträglich zu verfälschen,
- 3,: dem Prozessor zwar bis zum Ende der Hauptphase des Crashes über Prozessor-Außenanschlüsse des Gehäuses von außen,
nämlich von einem Crashsensor, Daten zur Ableitung von Kriterien zuleiten zu können, ohne später nach einem Crash bzw. nach einer Auslösung, die dann gespeicherten Daten über diese Prozessor-Außenanschlüsse manipulieren zu können,
- 4,: auf einfache Weise das Manipulieren der gespeicherten Daten weiter zu erschweren, sowie
- 5,: den manipulierenden Zugriff von außen auf die gespeicherten Daten weiter zu erschweren,
- 6,: das Manipulieren an gespeicherten Daten, welche den betreffenden, im Gehäuse angebrachten Crashsensor betreffen, noch stärker zu erschweren, sowie
- 7,: lokal ausreichend Energie zur Zündung der Zündpillen zur Verfügung zu stellen.

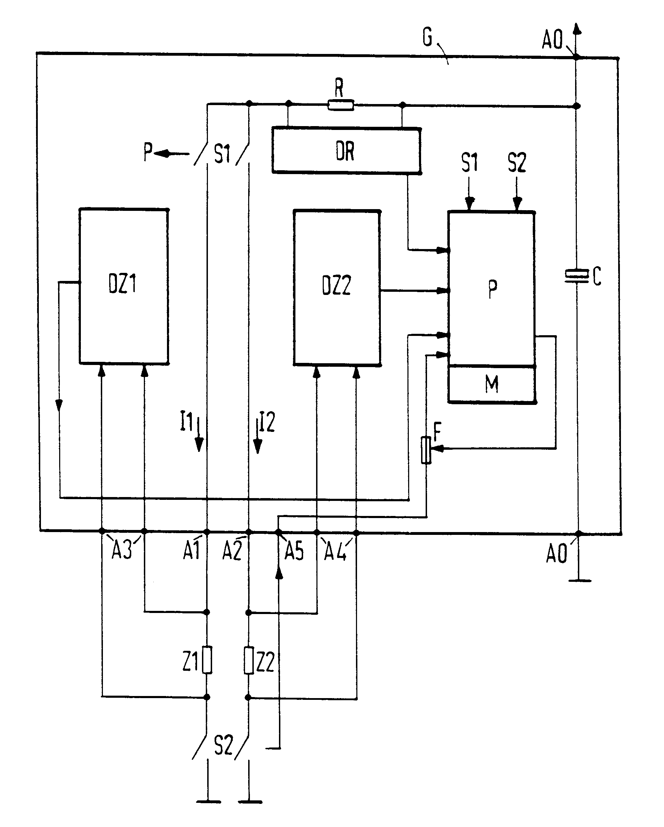

Die Erfindung und Weiterbildungen derselben werden anhand des in der Figur gezeigten Schemas eines Ausführungsbeispiels weiter erläutert.

Die Figur zeigt beispielhaft, daß an das Zündsteuergerät - bei der Erfindung stets außerhalb des Gehäuses G - zwei Zündpillen Z1, Z2 für Sprengladungen angeschlossen sind, welche ihrerseits im Crashfalle z.B. Airbags aufblasen, einen Überrollbügel aufstellen und / oder Gurtstrammer antreiben. Das Gehäuse G des Zündsteuergerätes enthält also bei der Erfindung auch nicht die Sprengladungen des Insassenschutzsystemes. - Im Sinne der Erfindung wird als "Zündsteuergerät" nur das Gehäuse G zusammen mit jenen Bestandteilen - z.B. P, S1, usw. - bezeichnet, welche innerhalb des Gehäuses G angebracht sind.

Das Gehäuse G enthält den Prozessor P, z.B. einen Mikroprozessor P, welcher im Betrieb aus den Ausgangssignalen eines oder mehrerer Crashsensoren, vgl. die hier jeweils zwei Schaltkontakte enthaltenden Crashsensoren S1 und S2, Kriterien für die Notwendigkeit für das Auslösen ableitet. Diese Crashsensoren können im Prinzip innerhalb oder außerhalb des Gehäuses G angebracht sein, vgl. den im gezeigten Beispiel im Gehäuse G angebrachten Crashsensor S1, und den dort außerhalb des Gehäuses G angebrachten Crashsensor S2.

In dem gezeigten Beispiel handelt es sich um zwei getrennte Sensoren S1, S2 mit jeweils zwei Kontakten, welche im Crashfalle direkt die Zündpillen Z1, Z2 zünden. Der Prozessor P, der z.B. ein Mikroprozessor P sein kann, überwacht die Ausgangssignale der Crashsensoren S1, S2 - evtl. hierbei auch direkt das Verhalten dieser Kontakte - , indem der Prozessor P während des Crashes - zumindest aus dem Verlauf von Ausgangssignalen des Crashsensors S1 und / oder S2 - Kriterien ableitet für die Notwendigkeit, ob - und evtl. auch zu welchem idealen Zeitpunkt - die Zündung der Zündpillen Z1, Z2 erfolgen sollte.

Um die Figur nicht zu unübersichtlich zu machen, wurde im gezeigten Beispiel zwar angenommen, daß die Crashsensoren S1, S2 ihrerseits unmittelbar die Zündpillen Z1, Z2 zünden. Häufig wird man jedoch die Zündpillen Z1, Z2 nicht direkt mittels der Kontakte der Crashsensoren S1, S2 zünden, sondern z.B. mittels des Prozessors P, z.B. gemäß der oben genannten PCT-Anmeldung PCT/DE 90/00125 : wie auch später noch beschrieben wird, wertet der Prozessor P dann seinerseits zuerst die Ausgangssignale der Crashsensoren S1, S1 aus und zündet anschließend seinerseits, entsprechend seiner eigenen aktuellen Bewertung dieser Ausgangssignale, die Zündpillen Z1, Z2 zu einem von ihm selbst, vom Prozessor P, bestimmten Zeitpunkt - falls der Prozessor P dann überhaupt eine Auslösung für notwendig hält.

Die Aufgabe der Erfindung ist, nachträglich auswertbare Daten über das durch einem Crash bewirkte Auslösen so sicher zu speichern, daß nachträglich nicht mehr ohne weiteres die gespeicherten Daten durch Manipulationen heimlich verfälscht werden können - z.B. durch nachträgliches Zünden von Zündpillen oder durch nachträgliches Vortäuschen eines Crashkriteriums. Damit sollen nämlich nach einem Crash - evtl. noch Wochen und Monate nach dem Crash - die gespeicherten Daten unverfälscht von einem Sachverständigen ausgelesen werden können, z.B. um solche Daten über die Auslösung z.B. Richtern, Verkehrssachverständigen, KFZ-Herstellern, KFZ-Zulieferern und Straßenplanern zur Verfügung zu stellen, bzw. um nachträglich verfälschte Daten als solche erkennen zu können.

Nachträgliche Manipulationen an den gespeicherten Daten, z.B. durch nachträgliches Zünden von Zündpillen Z1, Z2 oder durch nachträgliches Überschreiben der gespeicherten Daten im Speicher M, sollen also möglichst stark erschwert sein. Ebenso soll das nachträgliche Vortäuschen des Vorhandenseins oder Nichtvorhandenseins eines Crashsensor-Ausgangssignales und / oder eines Meßeinheit-Meßergebnisses möglichst stark erschwert sein.

Die Erfindung löst diese Aufgabe durch eine Kombination einer ganzen Reihe von Maßnahmen :

Ein erster Hauptaspekt der Aufgabe der Erfindung ist die richtige Erfassung bzw. Messung sowie die dauerhafte Speicherung von Daten über den Crash und über die Auslösung des Insassenschutzsystemes.

Bei der Erfindung speichert der Prozessor P - zusätzlich oder ausschließlich - alle, oder zumindest einen Teil der, vom Prozessor P abgeleiteten Crashkriterien bzw. Sensorausgangssignale-Auswertungen in einem PROM-Speicher M. Im PROM-Speicher M sollen also Daten darüber gespeichert werden, wie die Ausgangssignale des Crashsensors verliefen, also wie die Verzögerungen bzw. Bewegungen des Fahrzeuges beim Crash abliefen. Diese gespeicherten Daten sollen später einem Sachverständigen erkennen lassen, ob und welche Kriterien vorlagen, die eine Auslösung, jedenfalls zu einem speziellen Zeitpunkt, nötig machten.

Im Speicher M sollen aber nicht nur Details über die Sensorausgangssignale, sondern auch Daten über die Auslösung selbst, also z.B. über die Größe der Zündströme, vgl. I1/I2, gespeichert werden, welche später - evtl. erst Wochen und Monate nach dem Crash - einem Sachverständigen zusätzlich erkennen lassen, ob und wie die vom Zündsteuergerät gesteuerte Auslösung ablief.

Bei der Erfindung werden also während des Crashes zumindest zwei Arten von Daten im Gehäuse G des Zündsteuergerätes dauerhaft gespeichert : erstens Daten über die vom Prozessor P abgeleiteten Kriterien und zweitens Daten über die Auslösung von Zündströmen I1/I2, also über der Verlauf der Zündstrom-Auslösung.

Die Erfindung enthält im Gehäuse G also auch mindestens eine einzige Meßeinheit, vgl. die Meßeinheiten DZ1 und DZ2 sowie DR, welche ihrerseits während des Crashes mehr oder weniger präzise messen, ob und wie im Detail das Zündsteuergerät das Insassenschutzsystem auslöste. Diese Meßeinheiten messen oder ermitteln - evtl. auch erst in Zusammenarbeit mit dem Prozessor P - die betreffenden zu speichernden Daten über Einzelheiten des Verlaufes des beim Auslösen fließenden Zündstromes und/oder über Einzelheiten des Verlaufes der beim Auslösen, z.B. an dem Meßwiderstand R, auftretende Spannungen. Diese Meßeinheiten messen bzw. ermitteln also während des Crashes, vor allem in seiner Haupt- und evtl. auch noch in seiner Endphase, z.B. Spannungen über den, und / oder Ströme I1/I2 durch die, Zündpillen Z1, Z2 - oder auch daraus abgeleitete Werte wie z.B. Steilheiten von Spannungsflanken und Zeitintegrale von solchen Spannungen und Strömen.

Zu den Daten, welche über die Zündstrom-Auslösung gespeichert werden, gehören zumindest einzelne der gemessenen bzw. ermittelten Daten, z.B. solche, welche direkt oder indirekt den Maximalwert und / oder den Verlauf des ausgelösten Zündstromes I1, I2 betreffen, und / oder Daten, welche direkt oder indirekt den Verlauf der entsprechenden Zündspannung über den Zündpillen Z1, Z2 betreffen. Dabei können diese Daten als solche - oder z.B. überarbeitet vom Prozessor P - in den PROM-Speicher M geschrieben werden. Alle diese zu speichernden Daten können im Prinzip durch den Prozessor P, evtl. aber auch direkt durch die Meßeinheiten DZ1, DZ2, R/DR, in den PROM-Speicher geschrieben werden.

Diese Meßeinheiten können z.B. durch einen, die Spannungen über den Zündpillen Z1, Z2 messenden Differenzverstärker DZ1, DZ2 und / oder durch einen, die Spannung über einen Meßwiderstand R messenden Differenzverstärker DR gebildet werden, wobei der Meßwiderstand R im Inneren des Gehäuses G in den Zündstromkreis eingefügt ist. Diese Meßeinheit, oder einer der Meßeinheiten, vgl. R/DR, kann also zusätzlich zu Meßzwecken einen oder mehrere Meßwiderstände R enthalten, welche in den / in die Zündstromkreis/-e der Zündpille/-n Z1, Z2 eingefügt sind und Daten über die beim Auslösen über dem Meßwiderstand R auftretende Spannungen, oder über Einzelheiten des Verlaufes dieser auftretenden Spannungen, liefern. Ein solcher Meßwiderstand R kann auch, vgl. die Figur, in einen gemeinsamen Leitungsabschnitt mehrerer oder aller Zündpillen Z1, Z2 eingefügt sein, um Daten über das gemeinsame Verhalten der Zündpillen Z1, Z2 zu liefern. Dadurch wird nämlich unmittelbar der Zündstrom I1/I2 - z.B. mittels eines Differenzverstärkers DR - meßbar, welcher - je nach Schaltung einzeln die Zündströme, oder wie in der Figur gezeigt als gegenseitige Überlagerung der Zündströme I1+I2 - beim Auslösen über die betreffenden Meßwiderstände R fließt.

Alle jene im PROM-Speicher M gespeicherten Daten, z.B. über die aktuelle Größe eines Stromes, werden übrigens, z.B. mittels des Prozessors P, im Speicher M bevorzugt zusammen mit Zeitangaben gespeichert, welche auf die jeweilige Dauer seit Beginn des Crashes bezogen sind. So kann der Sachverständige später aus den gespeicherten Daten besonders genau ermitteln und beurteilen, wie der Crash verlief, auch ob das Insassenschutzsystem beim Crash zufriedenstellend - der Art und der Schwere des Crashes entsprechend - arbeitete.

Im gezeigten Beispiel wird, wieder zur Vereinfachung der Figur, auch nur einen einziger Kondensator C als Energiespeicher gezeigt, welcher die zum Zünden der Zündpillen Z1, Z2 erforderliche Energie speichert. Man kann jedoch, z.B. gemäß der oben angegebenen Anmeldung PCT/DE 90/00125, jeweils auch einen eigenen Kondensator pro Zündpille Z1, Z2 als Energiespeicher anbringen.

Neben der dauerhaften Speicherung der Daten ist ein zweiter Hauptaspekt der Aufgabe der Erfindung die Erschwerung oder völlige Verhinderung von nachträglichen heimlichen Manipulationen der im PROM-Speicher M gespeicherten Daten.

Das erfindungsgemäße Zündsteuergerät ist daher stets von einem möglichst soliden, einen Crash überstehenden, nur unter Hinterlassung erkennbarer Spuren von Gewalt aufmachbaren Gehäuse G umgeben.

Das Gehäuse G weist bei der Erfindung möglichst keine steuerbaren elektrischen Außenanschlüsse auf, über welche die nach einem Crash im Speicher gespeicherten Daten, vor allem auch die mittels der Meßeinheit über die Auslösevorgänge ermittelten Daten, nachträglich unauffälllig verfälscht werden können. Auch indirekte Versuche zur Manipulation der gespeicherten Daten werden bei der Erfindung erschwert, wenn nach einem Crash besonders der Prozessor P über keinen der Außenanschlüsse des Gehäuses G veranlaßt werden kann, die im PROM-Speicher M über einen Crash gespeicherte Daten zu verfälschen.

Zumindest eine der im Gehäuse G angebrachten Meßeinheiten, vgl. R/DR, ist bei der Erfindung von außen über Außenanschlüsse des Gehäuses, vgl. A0 bis A5, im Regelfall kaum zugänglich, um das nachträgliche Manipulieren zu erschweren. Dazu kann, vgl. die Figur, zwischen dieser Meßeinheit R/DR und dem noch am ehesten dafür in Frage kommenden Außenanschluß, vgl. A1/A2, jeweils ein Schalter S1 liegen, welcher nur unter Bedingungen, wie sie bei einem Crash auftreten, zur Auslösung kurzzeitig leitend wird.

Auf einfache Weise kann man Daten über den Verlauf des Auslösens gewinnen und speichern, welche nachträglich kaum noch manipulierbar bzw. verfälschbar sind, wenn eine - bevorzugt im Inneren des Gehäuses G angebrachte - Meßeinheit einen oder mehrere Meßwiderstände R enthält, welcher in den/die Zündstromkreis/-e der Zündpille/-n Z1/Z2 eingefügt ist. Ein solcher Meßwiderstand ist von außen für Manipulationen kaum nach zugänglich, wobei dann Daten über die beim Auslösen über den Meßwiderstand R auftretende Spannung, oder über Einzelheiten des Verlaufes dieser auftretenden Spannungen, für den Speicher M liefert.

Weil die Zündpillen Z1, Z2 außerhalb des Zündsteuergerätes angebracht sind, könnte man zwar zur nachträglichen Manipulation versuchen, diese Zündpillen nachträglich, nach dem Crash, für sich zünden. Dazu gibt es zwei Varianten :

Wenn hierbei diese Zündpillen Z1, Z2 so gezündet werden, daß kein Zündstrom I1 oder I2 durch das Gehäuse G fließt, wird aus den im PROM-Speicher M weiterhin unverändert gespeicherten Daten erkennbar, daß das Zündgerät selbst nicht die Zündpillen Z1, Z2 zündete.

Selbst wenn aber bei der Manipulation dieser Zündstrom, vgl. I1 und / oder I2, durch das Zündsteuergerät G hindurch geleitet würde, sollen jedoch erfindungsgemäß die im PROM-Speicher M dauerhaft gespeicherten Daten erkennen lassen, was wirklich während des vorhergehenden Crashes geschah, und / oder zumindest erkennen lassen, daß die im PROM-Speicher M gespeicherten Daten manipuliert wurden. Im PROM-Speicher M werden daher erfindungsgemäß bei einem Crash nicht nur die von Meßeinheiten - vgl. R/DR, DZ1, DZ2 - über den Zündstrom I1/I2 und / oder über die Zündspannung ermittelten wichtigsten Daten dauerhaft gespeichert, sondern zusätzlich zumindest auch einige Daten, welche beim Crash vom Prozessor P aus den Ausgangssignalen des / der Crashsensors S1 / Crashsensoren S1/S2 abgeleitet wurden - wobei zusätzlich zu diesen Daten jeweils die zugehörenden Zeitangaben im PROM-Speicher M mitgespeichert werden können. Bei einer nachträglichen Manipulation können nämlich, selbst mit spezifischen Fachkenntnissen, kaum jemals gleichzeitig alle diese Daten zur Verfälschung der gespeicherten Daten gleichzeitig simuliert bzw. durch Manipulation erzeugt und unauffällig nachträglich im PROM-Speicher M gespeichert werden : Daten, welche entweder während des Crashes oder während der Manipulation durch den Prozessor P aus Sensorausgangssignalen abgeleitet und gespeichert werden, passen nämlich kaum jemals sinnvoll zu jenen Daten, welche gleichzeitig die Meßeinheiten besonders über die Auslösung und den Verlauf der Zündströme I1/I2 liefern. Nur unmanipulierte Daten passen nur nach einem echten Crash, welcher das Zündsteuergerät zur Auslösung oder Nichtauslösung veranlaßte, ausreichend sinnvoll zueinander. Verzögerungen, wie sie bei einem echten Crash auftreten, können auch z.B. durch Schütteln des Gehäuses G kaum jemals unauffällig simuliert werden.

Um das Manipulieren der gespeicherten Daten noch stärker zu erschweren, kann man, vgl. die Figur, am Gehäuse G möglichst wenige elektrische Außenanschlüsse anbringen. Z.B. kann man am Gehäuse G bevorzugt, vgl. die Figur, nur noch Außenanschlüsse A0, A1 und A2 anbringen, über welche teilweise, vgl. A0, zwar die Stromversorgung zugeleitet wird, über welche aber zumindest im Regelfall keine Daten eingegeben werden können, die das Manipulieren gestatten.

Harmlos ist, als elektrische Außenanschlüsse die Anschlüsse A0 der Stromversorgung der im Gehäuse G angebrachten Bestandteile P, M, R/DR, DZ1, DZ2, S1 anzubringen. Harmlos ist bei der Erfindung auch, die Außenanschlüsse A1, A2, über welche die Zündpille/-n Z1, Z2 gezündet werden, anzubringen, u.a. weil im Gehäuse G die von außen kaum je zugängliche Meßeinheit R/DR angebracht ist, mit deren Hilfe der Zündstrom I1, I2 gemessen und Daten darüber gespeichert werden.

Die Erfindung läßt aber im Prinzip zu, trotzdem Außenanschlüsse von weiteren Meßeinheiten, vgl. die Außenanschlüsse A3 und A4 der Meßeinheiten DZ1 und DZ2, anzubringen, zumindest wenn zusätzlich im Gehäuse G die von keinem Außenanschluß mehr ohne weiteres zugängliche Meßeinheit, vgl. R/DR, angebracht ist, welche ebenfalls Daten über den Verlauf des Zündstromes I1/I2 für die Speicherung im PROM-Speicher M liefert. Im Gegenteil : Ein Vergleich der gespeicherten Daten, welche die verschiedenen, von außen zugänglichen und von außen unzugänglichen Meßeinheiten lieferten, macht Manipulierungsversuche recht leicht erkennbar, ohne die unverfälschte Speicherung der Daten der von außen unzugänglichen Meßeinheit R/DR erheblich zu gefährden. - In der Figur sind der Übersichtlichkeit halber zwar getrennte Außenanschlüsse A1 und A2 angegeben, daneben getrennt die jeweils zwei Klemmen aufweisenden Außenanschlüsse A3 und A4 der Meßeinheiten DZ1, DZ2. Weil aber beim gezeigten Beispiel jeweils eine der Klemmen der Außenanschlüsse A3 und A4 auf demselben Potential wie die Außenanschlüsse A1 und A2 liegen, kann die Anzahl der Außenanschlüsse des gezeigten Beispiels verringert werden, ohne die Funktion des Zündsteuergerätes zu stören : Es können nämlich - durch eine entsprechende Änderung der Verdrahtung im Inneren des Gehäuses G -jeweils diese betreffenden Klemmen der Außenanschlüsse A3 und A4 auch unmittelbar durch alleiniges Anbringen der Außenanschlüsse A1 und A2 ersetzt werden.

Die Erfindung läßt sogar im Prinzip zu, am Gehäuse G einen oder mehrere elektrische Prozessor-Außenanschlüsse A5 anzubringen, über welche im Betrieb, vor allem während des Crashes bis zum Ende der Hauptphase des Crashes, dem Prozessor P die Ausgangssignale eines oder mehrerer, nicht im Gehäuse G angebrachter Crashsensoren S2 zugeleitet werden, damit der Prozessor P auch daraus Kriterien über die Notwendigkeit des Auslösens ableiten kann. Man könnte dann zwar zunächst noch die Sorge haben, daß ein über die Erfindung gut informierter Fachmann mittels dieses Prozessor-Außenanschlusses A5 die über den Crash und die Auslösung gespeicherten Daten nachträglich heimlich manipulieren könnte. Die Sicherheit gegen diese nachträgliche Manipulation kann dann aber zusätzlich dadurch erhöht werden, daß in die Verbindung A5-P zwischen den betreffenden Prozessor-Außenanschlüssen, vgl. A5, und dem Prozessor P jeweils eine Sicherung F eingefügt wird, welche nach dem Crash durch den Prozessor P unverzüglich dauerhaft unterbrochen wird. Diese Sicherung F kann unverzüglich die betreffende Verbindung A5-P dauerhaft unterbrechen, sobald der Prozessor P nach dem Auslösen keine weiteren Ausgangssignale des / der betreffenden, außen angebrachten Crashsensoren S2 mehr verarbeiten muß. Diese Sicherung F kann also dann die Verbindung z.B. nach 0,1 Sekunden unterbrechen, - aber im allgemeinen spätestens einige Sekunden nach dem Auslösen. - Übrigens kann diese Sicherung F auch durch einen entsprechenden Programmabschnitt im Programmspeicher des Prozessors P gebildet sein und die äquivalenten Blockierfunktion auf den betreffenden Prozessoreingang wie eine Hardware-Sicherung F aufweisen.

Auf einfache Weise kann das Manipulieren der gespeicherten Daten dadurch weiter erschwert werden, daß das Gehäuse G auch selbst mindestens einen Crashsensor, vgl. S1, enthält, aus dessen Ausgangssignalen der Prozessor P Kriterien ableitet. Dem Manipulierer fällt es dadurch noch schwerer, Ausgangssignale dieses innen angebrachten Crashsensors S1 zu simulieren, als wenn das Gehäuse G nur einen außen angebrachten Crashsensor S2undeinen Prozessor-Außenanschluß A5 aufweist.

Besonders sicher ist das erfindungsgemäße Zündsteuergerät, das mit einem außerhalb des Gehäuses G angebrachten Crashsensor S2 arbeitet, wenn dieses Gehäuse G zusätzlich in seinem Inneren einen eigenen Crashsensor S1 aufweist. Dann sind nämlich nachträgliche Manipulationen auch durch Widersprüche zwischen den für den Crashsensor S1 und für den Crashsensor S2 gespeicherten Daten erkennbar.

Man kann den manipulierenden Zugriff von außen auf die gespeicherten Daten weiter dadurch erschweren, daß in Reihe zum Meßwiderstand R im Gehäuse G Schalter S1 liegen, deren Schaltstrecken nur zum Auslösen des Zündstromes I1/I2 leitend gemacht werden. Diese Schalter S1 können im Prinzip bereits durch die Schaltstrecken eines Crashsensors S1 gebildet werden, vgl. die Figur.

Zusätzlich kann daher, was besonders wenig Aufwand erfordert, der im Gehäuse G angebrachte Crashsensor S1 jeweils eine von ihm selbst betätigte Schaltstrecke S1 zum Schalten des Zündstromes I1 und / oder I2 enthalten, wobei seine Schaltstrecke S1 in Reihe zu zumindest einem der Meßwiderstände R liegt.

Diese Schalter S1 können aber auch, statt Schaltstrecken des im Gehäuse G angebrachten Crashsensors S1, zusätzlich im Gehäuse G angebrachte Schalter S1 sein, wobei z.B. der Prozessor P, nachdem er die Notwendigkeit des Auslösens erkannte, selber diesen Schalter S1 - oder mehrere solche Schalter S1 - betätigt. Es handelt sich dann um ein Zündsteuergerät, dessen Gehäuse G zwar mindestens einen Crashsensor enthält, aus dessen Ausgangssignalen der Prozessor P Kriterien ableitet. Das Gehäuse G enthält aber zusätzlich einen - oder mehrere - direkt nur vom Prozessor P, aber direkt nicht vom Crashsensor S1 gesteuerte, den Zündstrom I1 und / oder I2 schaltende Schalter S1, welche in Reihe zu zumindest einem der Meßwiderstände R liegen und welche an die Anschlüsse A1, A2 der Zündpille/-n Z1, Z2 angeschlossen sind. Bei dieser Weiterbildung ist für den Manipulierer der nachträgliche Zugriff auf den im Gehäuse G angebrachten Crashsensor S1, bzw. auf die mittels dieses Crashsensors S1 gespeicherten Daten, besonders erschwert.

## Patentansprüche

1. Zündsteuergerät (G) zum Auslösen eines Insassenschutzsystemes eines Fahrzeuges durch elektrisches Zünden einer oder mehrerer Zündpillen (Z1, Z2), mit
- einem Prozessor (P), welcher im Betrieb aus den Ausgangssignalen eines oder mehrerer Crashsensoren (S1, S2) Kriterien für die Notwendigkeit für das Auslösen ableitet,
- mindestens einer Meßeinheit (R/DR, DZ1, DZ2), welche während eines Crashes zumindest den Zündstrom (I1, I2) durch die betreffenden Zündpillen (Z1, Z2) und/oder davon abhängige Werte (z.B. Spannungen) mißt,
- einem Meßwiderstand (R) in der Meßeinheit (R/DR), welcher in den Zündstromkreis (I1, I2) der Zündpille (Z1, Z2) eingefügt ist, um Daten über den Verlauf des beim Auslösen darüber (R) fließenden Zündstromes (I1, I2) oder davon abhängige Daten zu ermitteln, und
- einem einen PROM-Speicher darstellenden Speicher (M) zum Speichern von bestimmten, im Crashfalle ermittelten Daten, die später zu erkennen gestatten, ob und wie das Insassenschutzsystem beim Crash auslöste, nämlich zum Speichern von
° zumindest einzelnen der ermittelten Daten, welche die beim Crash vom Prozessor (P) abgeleiteten Kriterien betreffen,
° und zumindest einzelnen der mittels der Meßeinheit/-en (R/DR, DZ1, DZ2) ermittelten Daten,
**dadurch gekennzeichnet**, daß
- der Meßwiderstand (R) in den / die Zündstromkreis/-e (I1, I2) der Zündpille/-n (Z1, Z2) so eingefügt ist, daß er von außen über Außenanschlüsse (A0 bis A5) des Gehäuses (G) des Zündsteuergerätes im Regelfall nicht direkt zugänglich ist, und
- zwar der Prozessor (P), die Meßeinheit/-en (R/DR, DZ1 und / oder DZ2) und der PROM-Speicher (M), aber keine Zündpille (Z1, Z2), auch keine Sprengladung des Insassenschutzsystemes, in dem solide einen Crash überstehenden, nur unter Hinterlassung erkennbarer Beschädigungen aufmachbaren Gehäuse (G) untergebracht sind.

2. Zündsteuergerät (G) nach Patentanspruch 1,
**dadurch gekennzeichnet,** daß
- das Gehäuse (G) als elektrische Außenanschlüsse (A0, A1, A2)
^{·}zwar die Anschlüsse (A0) der Stromversorgung der im Gehäuse (G) angebrachten Bestandteile (P, M, R/DR, DZ1, DZ2, S1)
^{·}und die Anschlüsse (A1, A2), über welche (A1, A2) die Zündpille/-n (Z1, Z2) gezündet werden,
aufweist,
^{·}aber keine Anschlüsse, über welche die im PROM-Speicher (M) über einen Crash gespeicherten Daten direkt, oder - z.B. über eine im Gehäuse (G) angebrachte Meßeinheit (R/DR) - indirekt, von außerhalb des Gehäuses (G) verfälscht werden können, ohne die Manipulation verratende Daten im PROM-Speicher (M) zu hinterlassen.

3. Zündsteuergerät (G) nach Patentanspruch 2,
**dadurch gekennzeichnet**, daß
- das Gehäuse (G) zwar einen oder mehrere Prozessor-Außenanschlüsse (A5) aufweist, über welche (A5) im Betrieb dem Prozessor (P) zur Ableitung der Kriterien Ausgangssignale eines oder mehrerer, nicht im Gehäuse (G) angebrachter Crashsensoren (S2) zugeleitet werden,
- aber die Verbindung (z.B. mittels der Sicherung F) zwischen den betreffenden Prozessor-Außenanschlüssen (A5) und dem Prozessor (P) unverzüglich dauerhaft unterbrochen wird, sobald der Prozessor (P) nach dem Auslösen keine weiteren Ausgangssignale des / der betreffenden Crashsensoren (S2) mehr verarbeiten muß, noch bevor die gespeicherten Daten manipuliert werden können,
- die betreffende Verbindung (A5 - P) also z.B. 0,1 Sekunden, höchstens einige Sekunden nach dem Auslösen, dauerhaft unterbrochen wird.

4. Zündsteuergerät (G) nach Patentanspruch 1, 2 oder 3,
**dadurch gekennzeichnet**, daß
- das Gehäuse (G) mindestens einen Crashsensor (S1) enthält, aus dessen (S1) Ausgangssignalen der Prozessor (P) Kriterien ableitet und der (S1) eine von ihm (S1) selbst betätigte Schaltstrecke (S1), welche (S1) in Reihe zu zumindest einem Meßwiderstand (R) liegt, zum Schalten des Zündstromes (I1 und / oder I2) enthält.

5. Zündsteuergerät (G) nach einem den vorhergehenden Patentansprüche,
**dadurch gekennzeichnet**, daß
- sein Prozessor (P), nach dem Erkennen der Notwendigkeit des Auslösens des Insassenschutzsystems, selber einen oder mehrere Schalter (S1) betätigt, welche (S1) den Zündstrom (I1, I2) durch die Zündpille/-n (Z1, Z2) einschalten.

6. Zündsteuergerät (G) nach Patentanspruch 5,
**dadurch gekennzeichnet**, daß
- das Gehäuse (G) zwar einen Crashsensor (S1) enthält, aus dessen Ausgangssignalen der Prozessor (P) Kriterien ableitet, aber
- das Gehäuse (G) auch einen direkt nur vom Prozessor (P), aber direkt nicht vom Crashsensor (S1) gesteuerten, den Zündstrom (I1 und / oder I2) schaltenden Schalter (S1), welcher (S1) in Reihe zu zumindest einem der Meßwiderstände (R) liegt, enthält.

7. Zündsteuergerät (G) nach einem der vorhergehenden Patentansprüche,
**dadurch gekennzeichnet**, daß
- das Gehäuse (G) einen oder mehrere Zündkondensatoren (C), welche (C) die für die Zündung nötige elektrische Energie speichern, enthält.

## Claims

1. Firing control device (G) for triggering a passenger restraint system of a vehicle by electrically firing one or more firing pellets (Z1, Z2), having
- a processor (P) which, during operation, derives criteria for the necessity of triggering from the output signals of one or more crash sensors (S1, S2),
- at least one measuring unit (R/DR, DZ1, DZ2) which during a crash measures at least the firing current (I1, I2) flowing through the respective firing pellets (Z1, Z2) and/or values (for example voltages) dependent thereon,
- a measuring resistor (R) in the measuring unit (R/DR), which resistor is inserted into the firing circuit (I1, I2) of the firing pellet (Z1, Z2) in order to determine data relating to the variation of the firing current (I1, I2) flowing across said resistor (R) during triggering or data which are dependent thereon, and
- a memory (M) which constitutes a PROM memory, for storing specific data which are determined in the case of a crash and from which it can later be detected whether and how the passenger restraint system triggered during the crash, namely for storing
· at least some of the data determined which relate to the criteria derived by the processor (P) during a crash,
· and at least some of the data determined by means of the measuring unit/units (R/DR, DZ1, DZ2),
characterised in that
- the measuring resistor (R) is inserted into the firing circuit/circuits (I1, I2) of the firing pellet/pellets (Z1, Z2) in such a way that it is usually not directly accessible from the outside via external terminals (A0 to A5) of the housing (G) of the firing control device, and
- in fact the processor (P), the measuring unit/units (R/DR, DZ1 and/or DZ2) and the PROM memory (M), but no firing pellet (Z1, Z2) and also no explosive charge of the passenger restraint system, are mounted in the housing (G) which survives a crash intact and cannot be opened without leaving behind detectable damage.

2. Firing control device (G) according to Patent Claim 1, characterised in that
- the housing (G) has as external electrical terminals (A0, A1, A2)
· specifically the terminals (A0) of the power supply of the components (P, M, R/DR, DZ1, DZ2, S1) provided in the housing (G)
· and the terminals (A1, A2) via which (A1, A2) the firing pellet/pellets (Z1, Z2) are fired,
· but not terminals via which the data relating to a crash and stored in the PROM memory (M) can be falsified directly, or indirectly - for example via a measuring unit (R/DR) mounted in the housing (G) - from outside the housing (G) without leaving behind data in the PROM memory (M) which would indicate tampering.

3. Firing control device (G) according to Patent Claim 2, characterised in that
- the housing (G) has one or more external processor terminals (A5) via which (A5) output signals of one or more crash sensors (S2) not mounted in the housing (G) are fed to the processor (P) during operation in order to derive the criteria,
- but the connection (for example by means of the protection F) between the respective external processor terminals (A5) and the processor (P) is immediately broken permanently as soon as, after triggering, the processor (P) no longer has to process any further output signals of the respective crash sensor/sensors (S2) before the stored data can be tampered with,
- the respective connection (A5 - P) is therefore permanently broken for example 0.1 seconds, at most several seconds, after triggering.

4. Firing control device (G) according to Patent Claim 1, 2 or 3, characterised in that
- the housing (G) contains at least one crash sensor (S1) from whose (S1) output signals the processor (P) derives criteria, said crash sensor (S1) containing a switching path (S1) which is actuated by it (S1) itself and which (S1) is located in series with at least one measuring resistor (R) for switching the firing current (I1 and/or I2).

5. Firing control device (G) according to one of the preceding patent claims, characterised in that
- after the detection of the necessity of triggering the passenger restraint system, its processor (P) itself actuates one or more switches (S1), which (S1) switch on the firing current (I1, I2) which flows through the firing pellet/pellets (Z1, Z2).

6. Firing control device (G) according to Patent Claim 5, characterised in that
- the housing (G) contains a crash sensor (S1) from whose output signals the processor (P) derives criteria but
- the housing (G) also contains a switch (S1) which is controlled directly only by the processor (P), but not directly by the crash sensor (S1) and switches the firing current (I1 and/or I2) and which (S1) is located in series with at least one of the measuring resistors (R).

7. Firing control device (G) according to one of the preceding patent claims, characterised in that
- the housing (G) contains one or more firing capacitors (C), which (C) store the electrical energy necessary for firing.

## Revendications

1. Appareil de commande d'amorçage (G) servant à déclencher un système de protection pour passager d'un véhicule au moyen de l'amorçage électrique d'une ou de plusieurs amorces (Z1, Z2), comprenant
- un processeur (P), qui, en fonctionnement, établit, à partir des signaux de sortie d'un ou plusieurs capteurs de collision (S1, S2), des critères pour la nécessité du déclenchement,
- au moins une unité de mesure (R/DR, DZ1, DZ2), qui, pendant une collision, mesure au moins le courant d'amorçage (I1, I2) traversant les amorces concernées (Z1, Z2) et/ou des valeurs (par exemple des tensions), qui dépendent de ce courant,
- une résistance de mesure (R) située dans l'unité de mesure (R/DR) et qui est insérée dans le circuit d'amorçage (I1, I2) de l'amorce (Z1, Z2) pour déterminer des données concernant l'allure du courant d'amorçage (I1, I2), qui circule dans la résistance (R) lors du déclenchement, ou des données qui dépendent de ce courant, et
- une mémoire (M) qui est constituée par une mémoire PROM et sert à mémoriser des données déterminées, qui sont établies dans le cas d'une collision et qui permettent ultérieurement d'identifier si et comment le système de protection des passagers s'est déclenché lors de la collision, à savoir pour mémoriser
. au moins des données individuelles parmi les données déterminées et qui concernent les critères établis par le processeur (P) lors de la collision,
. et au moins des données individuelles faisant partie des données déterminées au moyen de la ou des unités de mesure (R/DR, DZ1, DZ2),
caractérisé par le fait que
- la résistance de mesure (R) dans le ou les circuits d'amorçage (I1, I2) de la ou des amorces (Z1, Z2) est montée de telle sorte qu'en général elle n'est pas accessible directement de l'extérieur au niveau de bornes de sortie (A0 à A5) du bottier (G) de l'appareil de commande d'amorçage, et
- en général le processeur (P), la ou les unités de mesure (R/DR, DZ1 et/ou DZ2) et la mémoire PROM (M) sont logées, à l'exclusion d'amorces (Z1, Z2), ni de charges explosives du système de protection des passagers, dans le bottier qui résiste à une collision et que l'on ne peut ouvrir qu'en laissant subsister des endommagements identifiables.

2. Appareil de commande d'amorçage (G) suivant la revendication 1, caractérisé par le fait que
- le boîtier (G) comporte comme bornes électriques extérieures (A0, A1, A2),
. d'une manière générale les bornes (A0) du système d'alimentation en courant des composants (P, M, R/DR, DZ1, DZ2, S1), qui sont montés dans le boîtier (G),
. et les bornes (A1, A2), au moyen desquelles (A1, A2) la ou les amorces (Z1, Z2) sont amorcées,
. et ne comporte aucune borne, par l'intermédiaire de laquelle les données mémorisées concernant une collision et dans la mémoire PROM (M) ne peuvent être altérées directement ou indirectement - par exemple par l'intermédiaire d'une unité de mesure (R/DR) logée dans le boîtier (G) - à partir de l'extérieur du bottier (G), sans laisser subsister des données signalant la manipulation, dans la mémoire PROM (M).

3. Appareil de commande d'amorçage (G) suivant la revendication 2, caractérisé par le fait
- que le boîtier (G) possède en général une ou plusieurs bornes extérieures de processeur (A5), au moyen desquels (A5), pendant le fonctionnement, des signaux de sortie d'un ou de plusieurs capteurs de collision (S2), non disposés dans le boîtier (G), sont envoyés au processeur (P) pour l'obtention des critères,
- mais la liaison (par exemple au moyen du fusible F) entre les bornes extérieures concernées (A5) du processeur et le processeur (P) est rompue immédiatement de façon permanente, dès que, après le déclenchement, le processeur (P) n'a plus à traiter aucun autre signal de sortie du ou des capteurs concernés de collision (S2), mais avant que les données mémorisées puissent être manipulées,
- la liaison concernée (A5-P) est également interrompue de façon permanente par exemple pendant 0,1 seconde et au maximum pendant quelques secondes après le déclenchement.

4. Appareil de commande d'amorçage (G) suivant la revendication 1, 2 ou 3, caractérisé par le fait que
- le boîtier (G) contient au moins un capteur de collision (S1), à partir des signaux de sortie duquel (S1) le processeur (P) établit des critères et qui (S1) contient, pour la commutation du courant d'amorçage (I1 et/ou I2), une section de commutation (S1), qui est actionnée par le capteur (S1) lui-même et qui (S1) est branché en série avec au moins une résistance de mesure (A).

5. Appareil de commande d'amorçage (G) suivant l'une des revendications précédentes, caractérisé par le fait que
- son processeur (P) actionne lui-même, après identification de la nécessité du déclenchement du système de protection des passagers, un ou plusieurs interrupteurs (S1), qui appliquent le courant d'amorçage (I1, I2) traversant la ou les amorces (Z1, Z2).

6. Appareil de commande d'amorçage (G) suivant la revendication 5, caractérisé par le fait
- le boîtier (G) contient en général un capteur de collision (S1), à partir des signaux de sortie duquel le processeur (P) établit des critères, mais
- le boîtier (G) contient également un interrupteur (S1), qui est commandé directement et uniquement par le processeur (P), mais n'est pas commandé directement par le capteur de collision (S1) et qui commute le courant d'amorçage (I1 et/ou I2) et qui (S1) est branché en série avec au moins l'une des résistances de mesure (R).

7. Appareil de commande d'amorçage (G) suivant l'une des revendications précédentes, caractérisé par le fait que
- le boîtier (G) contient un ou plusieurs condensateurs d'amorçage (C) qui emmagasinent l'énergie électrique nécessaire pour l'amorçage.
